(19) **Europäisches Patentamt**

**European Patent Office**

**Office européen des brevets**

(11) **EP 1 578 038 A1**

(12) **EUROPEAN PATENT APPLICATION**

(43) Date of publication:
   **21.09.2005 Bulletin 2005/38**

(51) Int Cl.⁷: **H04B 10/08**

(21) Application number: **04447069.8**

(22) Date of filing: **19.03.2004**

(84) Designated Contracting States:
   **AT BE BG CH CY CZ DE DK EE ES FI FR GB GR HU IE IT LI LU MC NL PL PT RO SE SI SK TR**
   Designated Extension States:
   **AL LT LV MK**

(71) Applicant: **Multitel**
   **7000 Mons (BE)**

(72) Inventors:
   • **Yuksel, Kivilcim**
     **7000 Mons (BE)**

   • **Dupont, Samuel**
     **59166 Bousbecque (FR)**
   • **Hamoir, Dominique**
     **59144 Wargnies le Grand (FR)**
   • **Robette, Laurent**
     **7330 Saint-Ghislain (BE)**
   • **Foucart, Fabrice**
     **7640 Peronnes (BE)**

(74) Representative: **Van Malderen, Joelle et al**
   **pronovem - Office Van Malderen**
   **Avenue Josse Goffin 158**
   **1082 Bruxelles (BE)**

(54) **Device and method for real-time optical network monitoring**

(57)   The present invention is related to a monitoring device for an optical network, said network comprising a main line being connected to the network's head end at one end and to at least two branches at the other end. The monitoring device comprises an optical monitoring termination (OMT) being in connection with the network head end. The OMT comprises

•   equipment for sending monitoring signals and receiving backreflected and backscattered signals from the monitoring signals,
•   conversion means for converting the received signals into a waveform data,
•   processing means for deriving from the waveform data information regarding faults on the physical layer of the optical network, and
•   storage device for storing at least a part of the information regarding faults,

The monitoring device further comprises in at least one branch of the at least two branches an optical monitoring unit (OMU) in connection with that branch. At least one OMU comprises a switchable reflective element. The OMU and the OMT are arranged for communicating with each other.

Fig.1

**Description**

**Field of the invention**

The present invention is related to a device and to a method for real-time automatic monitoring of optical fibre paths in multibranch optical networks.

**State of the art**

Quality of service is key to multibranch optical access networks, as on the one hand, in order to keep the cost low, there is in general no protection scheme and on the other hand a disruption in the service would disconnect a specific user (small business, building, residential area,...) from broadband access (internet, TV, services, and even telephone).

In-service continuous monitoring techniques detecting and localising faults in passive optical networks (PONs) are therefore of great interest as they are expected to increase the service availability and provide substantial cost savings to telecommunication companies. In particular, physical layer monitoring systems which are independent from data transmission would be extremely valuable to guarantee the performance of the optical layer (fibres, splices, connectors, passive components) and specifically to detect and locate in real time the occurrence or building-up of defects in the optical network.

The most common diagnostic tool employed in physical layer testing systems is the Optical Time Domain Reflectometer (OTDR) equipment implementing the optical time domain reflectometry technology. This tool is designed according to the principle of the detection and analysis, during time, of the backscattered light from small imperfections and impurities present in a fibre, as well as from Rayleigh backscattering.

There are many off-the-shelf monitoring systems based on OTDRs which have been implemented for long distance transmission systems and monitor one point-to-point fibre line at a time.

In point-to-multipoint architectures however, OTDR suffers from the problem that the backscattered signals from each branch add up together, making the interpretation of the OTDR trace taken at the head of the PON ambiguous. To solve this problem, usage of a multiwavelength OTDR to observe the branches individually was proposed (see patent US 5285305 A), but this solution, whereby a specific monitoring wavelength is assigned to each branch, is quite expensive due to the high cost of the tuneable OTDR and wavelength-selective filters.

Another simple and effective way of monitoring is to introduce a reference reflection at the end of each branch and to detect the presence and qualitative height variations of reference reflection peaks to identify the faulty branch. However, the requirement of having branches of different lengths prohibits it to be a practical solution for a real, installed network (see L. *Wuilmart et al., 'A PC-based Method for the Localisation and Quantisation of Faults in Passive Tree-Structured Optical Networks Using OTDR Technique', Proc. IEEE LEOS'96, Boston, USA, November 1996, pp. 122-123).*

Patent application EP-A-02370054 discloses a monitoring method to determine the faulty branch as well as the fault parameters (type, location, loss, return loss) using a standard OTDR, that also works in case the optical distribution network has branches of equal length. A major limitation of the method is that, after detection of a fault, it cannot be applied in a continuous way to the following successive faults. If more than one fault occurs, the method cannot determine anymore all of the above-mentioned parameters.

More in specific, the control system of EP-A-02370054 is based on the use of an optical time domain reflectometry (OTDR) equipment and of variable reflectors, named Switchable Reflective Elements (SRE), located at the end of the branches. These SRE can switch between two possible states which are presence (reflective state) or absence (absorbent state, or default state) of the reflection. The OTDR transmits the light signal (monitoring signal) at a specific wavelength dedicated to the monitoring purposes (monitoring wavelength) and has the capability of receiving and measuring the backscattered light from the fibres in the network and backreflected light from the SREs. The monitoring method comprises the steps of :

- activating the end reflection of one branch. Activating means changing the state of the switchable reflective element belonging to this branch to the reflective state ('on' state) while all the other branches' switchable reflective elements are in their absorbent state ('off' state). The branch having its end reflection activated is the branch under control.
- sending a monitoring signal and receiving and measuring the received backscattered and backreflected light.
- comparing the end reflection value of the reflected light with a reference value in order to detect a fault in the branch under monitoring. The reference end reflection values for each branch are measured before starting monitoring process.
- activating another branch to be controlled and stopping or attenuating the end reflection of the branch previously controlled.

The above-described analysis has some important drawbacks, because :

1) after detecting one fault, this analysis methodology is not capable of detecting a new one (as long as the first one is not fixed) as it doesn't update reference values upon fault detection,

2) this analysis method cannot handle more than one simultaneously occurred fault, because it does not use the fault parameters of the previously detected fault when controlling a new branch and because it makes no use of the 'quantity' of the end reflection variations.

Fault quantification is one of the most challenging areas for the OTDR-based monitoring of a multibranch optical network. The real loss or real reflectance value of the fault occurring after a 1xN splitter can be calculated from what is read on the standard OTDR (apparent loss, apparent reflectance) .

Taking the fault loss, what is read on the standard OTDR (i.e. the apparent loss) is just a small fraction of the real loss value. Equation 1 describes the well-known relationship between the real and apparent losses, where $L_R$ (in dB) is the real loss and $L_A$ (in dB) is the corresponding loss value read by the OTDR in the N-branch network, i.e. the apparent loss.

$$L_R = -5 \log_{10} \left[ N \left( 10^{\frac{-L_A}{5}} - 1 \right) + 1 \right] \qquad \text{(equation 1)}$$

### Aims of the invention

The present invention aims to provide a device for real-time automatic monitoring of optical fibre paths in multibranch optical networks, like tree-structured PON, thereby overcoming the limitations of the prior art solutions. In a second object the invention aims to provide a method for monitoring a network, using said device.

### Summary of the invention

Present invention relates to a monitoring device for an optical network comprising a main line being connected to the network's head end, such as an optical line termination, at one end and to at least two branches at the other end, whereby the at least two branches may have either the same or a different length. The monitoring device comprises an optical monitoring termination (OMT) being in connection with the network head end. The OMT comprises

- equipment for sending a monitoring signal and receiving a backreflected and backscattered signal,
- conversion means for converting the received signal into a waveform data,
- processing means for deriving from the waveform data information regarding faults on the physical layer of the optical network, and
- storage device for storing at least a part of the information regarding faults.

The monitoring device further comprises in at least one branch of the at least two branches an optical monitoring unit (OMU) in connection with that branch. At least one OMU comprises a switchable reflective element. The OMT and OMU are arranged for communicating with each other.

In a preferred embodiment the monitoring device further comprises at least one wavelength selective coupling device, such as a WDM coupler.

In an advantageous embodiment the monitoring signals are pulsed signals and preferably OTDR signals.

In another preferred embodiment the OMT communicates control commands to the OMU directly with optical signals. The control commands are advantageously coded with series of optical pulses. Alternatively, the OMT communicates control commands to the OMU indirectly via the network head end and an optical network unit being in connection with the OMU.

In a specific embodiment each OMU has its own address. Preferably the OMT further comprises a list of the addresses of all of the OMUs.

Optionally the OMT is further in connection with external processing means and/or an external storage device. The processing and memory storing can in that case be performed remotely, for instance by a supervision computer or workstation, such as those in charge of controlling the network or even a wider-area network including the network under monitoring.

In an alternative embodiment the OMT is also arranged for communication with a network supervision unit.

The invention also relates to a method for monitoring a multi-branch optical network comprising a main line being connected to the network's head end at one end and to at least two branches at the other end by means of a monitoring device as described above. It comprises the steps of

- setting a switchable reflective element of a branch in the 'on' state, that branch being the current branch, and all other branches being in the 'off' state,
- taking a current waveform data for the current branch in the OMT, by sending a monitoring signal, receiving a backreflected signal from the switchable reflective element in the 'on' state and backscattered monitoring signals from the at least two branches and by converting the received signals,
- comparing the end-reflection peak of the current waveform data with that of a reference waveform data of the current branch,
- processing the current waveform data to derive information regarding faults on the physical layer of the optical network.

Advantageously the first step is preceded by the step of taking one-by-one a reference waveform data of each of the at least two branches.

After the step of taking a current waveform data the optional step may be performed of preprocessing the current waveform data.

In a preferred embodiment the reference waveform data is the most recent reference waveform data that was determined for said current branch.

In a typical embodiment the steps as described above are performed repeatedly for all branches. Preferably they are performed repeatedly for all branches until a fault indication occurs. Advantageously, after fault detection the step is performed of determining the fault and parameters related to it. Usually the step of taking a reference waveform data is repeated after determination of a fault.

In an advantageous embodiment info about the fault and its parameters is stored in the OMT. Alternatively it may be stored in any proper place in the network.

In an alternative embodiment, only a selection of branches are equipped with such an OMU, the other one (s) being equipped with a simplified, permanently reflective OMU. The use of permanently reflective OMU is advantageous for the longest branch as it reduces the cost while not requiring any specific data treatment.

In yet another embodiment, only the most critical branches (from an economical or technical point of view) are equipped with an OMU, the other ones, featuring non-reflective ends, implying that it may not be possible to determining faults occurring in these branches.

## Short description of the drawings

Fig. 1 represents a self-consistent monitoring system for a point-to-multipoint system according to the invention.

Fig. 2 represents an implementation of the optical monitoring unit block.

Fig. 3 represents Example 1 of the method according to the invention.

Fig. 4 represents Example 2 of the method according to the invention.

Fig. 5 represents Example 3 of the method according to the invention.

Fig. 6 represents a scheme from which the general formula for the real loss calculation is derived.

## Detailed description of the invention

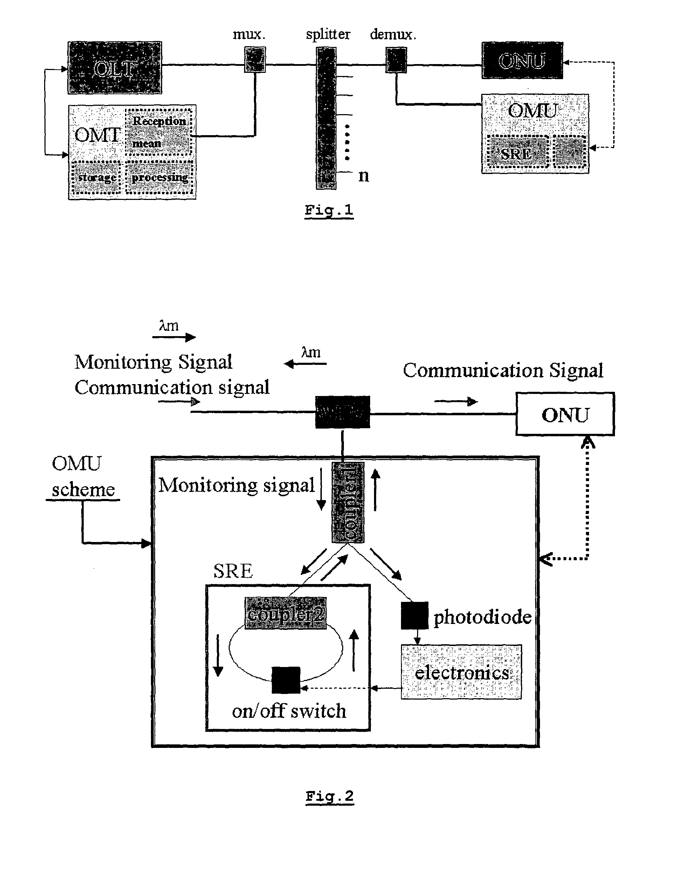

Present invention relates to a device and method for automatically monitoring a multibranch optical communication network. Re-using the switchable reflective elements (SRE) concept as described above, a stand-alone system to monitor the installed PONs is developed. Fig.1 shows a diagram of the self-consistent monitoring system implemented in an n-branch standard PON. Telecommunication equipments are also depicted. A unique Optical Line Termination (OLT) is connected to several Optical Network Units (ONUs) by several associated branches (n branches). The Optical Monitoring Termination (OMT) and the Optical Monitoring Unit (OMU) are presented as well.

The OMT is located in the head end. It does not only comprise equipment to handle all optical time domain reflectometry (OTDR) functionalities, but is also able to communicate with various parts of the network, such as with the Optical Monitoring Units to send switching commands for the SRE, or with the OLT to send data. The OMT communicates with OMUs in order to command the OMUs directly through optical signals as monitoring wavelengths or any proper wavelengths, or indirectly by using its connection with OLT (solid arrow in Fig.l), through which the commands are sent to ONU and finally conveyed to the OMU through the alternative command line between them (dashed arrow in Fig.1). Optionally the OMT is arranged for sending information and commands to (or receiving from) the network supervision unit. The OMT may also be connected to external storage and processing units.

An Optical Monitoring Unit (OMU) is located at the end of a selection of branches in the tree structured PON, preferably at the end of each branch. The OMU handles the communication with the OMT and switches the switchable reflective element (SRE) that is included in it.

The self-consistent monitoring device further comprises a wavelength selective device, such as WDM (Wavelength Division Multiplexing) couplers (or multiplexers (mux) /demultiplexers (demux)).

A monitoring wavelength is dedicated to the operation of the monitoring device. The monitoring wavelength is inside or outside the communication channels wavelength bands, for example 1625 nm.

Figure 2 shows a possible scheme of the OMU that is connected to the WDM coupler. The monitoring wavelength is combined with/extracted from the communication signal wavelength by the WDM coupler. This allows transparency of the self-consistent monitoring device towards the communication network.

Practically each OMU has its own address (like PCs in a Local Area Network). These addresses therefore are used to control each OMU individually allowing one and only one SRE to be switched to its 'on' state at a time when needed. In the OMU scheme of Fig. 2 the photodiode (on one branch of the couplerl) converts optical signals from the OMT into electrical signals. The electronic circuit after the photodiode could use them to command the 'on/off' state of the switch during a certain amount of time that could be coded after the address (for more flexibility). On the other branch of the coupler there is another coupler (coupler2, preferably a 3dB-coupler) and an optical switch plugged in between the two branches of the second coupler (representing together the SRE). Instead of the switch and coupler2, a switchable mirror or any other solution ensuring the same function can be used. The OMUs may as well be able to control, directly or indirectly the duration of a 'on' or 'off' state. Coupler1 may be a WDM coupler to accommodate the case where another laser is used for communication with OMU at a wavelength different from monitoring wavelength.

As explained above each OMU should have its own address. The OMT should preferably know the address of the each OMU connected to it. This can be obtained in several ways. One possible solution can be that when a new OMU is installed, a technician checks the already distributed addresses, then gives a new one to the OMU and updates the OMT with the new address of the newly installed OMU. This clearly is an easy but inflexible solution. A (more complex and more expensive) alternative could be to use a "bidirectional" OMU able to transmit information. This requires a modification of the OMU to add a laser next to the photodiode (or any other modification that gives the same functionality, such as using the switch as a modulator). After installation the new OMU sends an address request to the OMT that returns a non-affected one and modifies its 'connected OMUs' registry. An advantageous solution can be to use an installation OMU : when a new OMU is installed, a bidirectional OMU is used to get an address, the address is copied into a basic OMU and the basic OMU is installed in the network. The installed OMUs then are basic ones (low cost) and only one bidirectional OMU is needed at installation. Asking these addresses can also be done through ONU and OLT by using the command lines (solid and dashed arrows in Fig.1).

Throughout the monitoring process, the SREs are commuted to the reflective ('on') state and back to the absorbent 'off' state one after the other. The branch in which the SRE is in its 'on' state is called 'current branch'. When the analysis of the current branch is completed, another command including the address of the next branch is sent for analysing another branch. During this analysis a measurement is taken for each branch, when the SRE of only one branch is in its 'on' state and all the other branches' SREs are in their 'off' state. Several branches of different lengths could have their SREs in 'on' state at the same time. In this case 'current branch' could refer to this group of branches. Alternatively, some branches can be equipped with permanently reflective OMUs, in particular the longest one. Also some branches can be disregarded either by not making the expense of an OMU for these branches or by keeping their OMU in their 'off' state for a while (e.g. while fixing faults).

This measurement is done as follows. The OMT introduces an optical pulse to the input of the mainline of the multi-branch optical network, so that at the splitting point it is fractioned into optical pulses that simultaneously propagate in all the branches. These optical pulses are backscattered in their respective branches and backreflected by the reflective elements located at the Optical Monitoring Units (OMU). Backscattered and backreflected lights are recombined at the splitting point and form the 'response light'. It is converted into a digital 'waveform data', which represents the intensity of response light versus distance as discrete data points. To perform this task, OMT includes conversion means comprising at least: a photodetection device, an amplification system, analog-to-digital conversion and digital processing facilities.

A waveform data is composed of two main parts: data points representing the backscattered part of the light form the 'backscattering signature' and the data points representing the backreflected light coming from SREs make up the 'end reflection peak'.

The waveform data taken for the current branch is called 'current waveform data'. The 'reference waveform data' is a waveform data taken before the current waveform data. Reference waveform data are taken for the first time at PON installation. To acquire the reference waveform data of the $N^{th}$ branch, for example, the reflective element belonging to the $N^{th}$ branch is in its reflective state while all the others are in their absorbent state.

Whenever a fault is detected in the network during the monitoring process, these reference waveform data are updated. Doing so allows discrimination between new and previous faults. Periodic updates of reference waveform data as well as keeping a record of all previous reference waveform data can be provided optionally in order to deal with slow degradations in the network.

During the monitoring process the databases are used. These databases store the list of all parameters (type, location, loss,..) related to all the faults detected in the network, as well as some other parameters related to the network, such as attenuation coefficients of the fibre, length of the branches, .. etc. and the record of the reference waveform data (at least those relative to the previous faults). The values of the end-reflection peak variations are stored in the databases as well. These databases are physically kept in the OMT or in any other proper location in the network such as in the network supervision unit and created during network installation. Before connecting to the splitter, each branch is characterised as a point-to-point link in terms of attenuation coefficient at the monitoring wavelength and of the connection and splice losses/reflections contained in the branch. These losses/reflections and their locations together with the other parameters like the fibre attenuation coefficients are stored as initial values in the databases.

When the monitoring is started, all branches are treated consecutively according to the steps listed below:

1. Setting SRE states so that the SRE of one branch (preferably only one) is in its 'on' state (current branch), whereas all the other branches' SREs are in their 'off' state,
2. Taking a measurement for the current branch, yielding the current waveform data.
3. Preprocessing the current waveform data, such as normalising the unwanted power shifts.
4. Comparing the end-reflection peak of the current waveform data with that of the reference waveform data corresponding to the current branch. Any change in the end reflection peak indicates there is at least one fault in the current branch.
5. Processing on the backscattering signature of the current waveform data in order to find new steps/spikes (or an increase in the previous steps/spikes) in the backscattering signature. This process makes the analysis of discriminating steps/spikes starting from the point closer to the OMT towards the points near to the OMUs and during this process the information stored in the data bases is used.

Steps 1 to 5 are repeated periodically unless a 'fault indication' occurs ('idle state'). A fault indication can be a variation in the amplitude of the end-reflection peak (observed in step 4), or the occurrence of new steps/spikes, or even an increase in the previously quantified values of the existing steps and spikes in the backscattering signature (observed in step 5).

When a fault indication is observed, it is necessary to execute the steps 1 to 5 for all branches and to evaluate the results as a whole ('fault determining' state). To do that, all faulty branches are found by looking at the amplitude changes in the end reflection peak of each branch, and then the amount of these changes is evaluated together with the information coming from backscattering signature analysis, such as the calculated losses of the new steps or locations of new steps, ... and with the information stored in the database.

After 'determining' the new faults and before returning to the 'idle state', the databases are updated with the parameters of newly detected faults. Reference waveform data for all the branches are updated as well. 'Determining' means assigning the fault to the proper branch and finding out all the related parameters of the fault (type, location, loss, return loss, ...). For extremely difficult cases, all parameters may not be resolved. As an example, if the exact locations are not resolved, different alternative locations of the faults are proposed.

The monitoring process is also valid in the case of any repair performed on the network, leading to the disappearance of previously detected faults.

Some examples are given in order to clarify the monitoring process. One of the important novel features as compared to prior art solutions is that continuous monitoring is possible as the reference waveform data of the branches are updated. Further one or several new faults in one or several branches are identified, localised, and quantified. Example 3 will show that simultaneously occurring faults can also be dealt with in the monitoring method according to the invention.

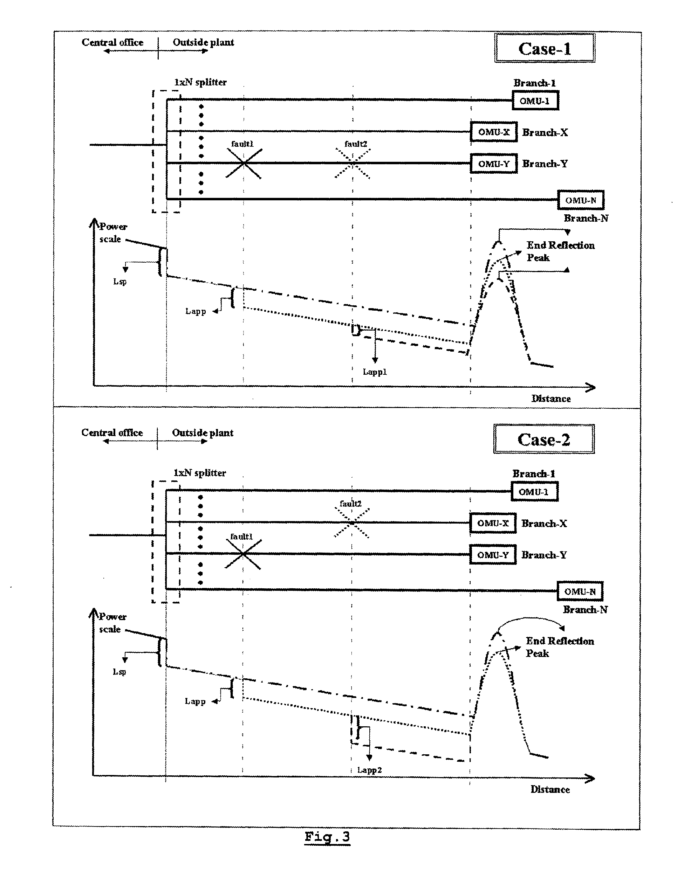

In Example 1 (see Fig.3) a N-branch point-to-multipoint network is shown together with the graphs illustrating the different waveform traces taken for branch-Y during the monitoring process at different times. Lsp represents the apparent loss value of the 1:N splitter. At a certain moment in time a fault (fault1, indicated by solid cross) in branch-Y is detected, branch-Y being the current branch in the monitoring process. This is done by comparing the current waveform data related to branch-Y (dotted line) with the reference waveform data of branch-Y (dashed-dotted line). As it concerns the first fault, the real loss can be calculated from the apparent loss (Lapp) using the above-mentioned equation 1. Several data regarding this fault (type, location, real and apparent loss etc.) are determined and stored in the databases. The various reference waveform data are updated. Some time later a second fault, fault2 (dashed cross) is detected. Two cases are considered. In case 1 said second fault occurs in the same branch as the first fault, whereas in case 2 the second fault occurs in another branch. In case 1 the occurrence of fault2 leads to a decrease in the end-reflection peak of the waveform data taken for branch-Y (dashed line), whereas in case 2 the occurrence of fault2 does not change the end-reflection peak, but changes the end-reflection peak of the waveform data related to branch-X (not shown in the figure). This allows to assign the fault2 to the proper branch in the two cases. By comparing the apparent losses $L_{app1}$ and $L_{app2}$ (Fig.3) one can see the apparent loss is not the same in both cases. For the second fault a direct quantification is not possible anymore. The real loss for the second fault (and all subsequent faults) is to be calculated using a formula (cfr. infra) that takes into account all previously detected faults (which were recorded in the databases). Again all available info is stored. Also the reference waveform data are updated.

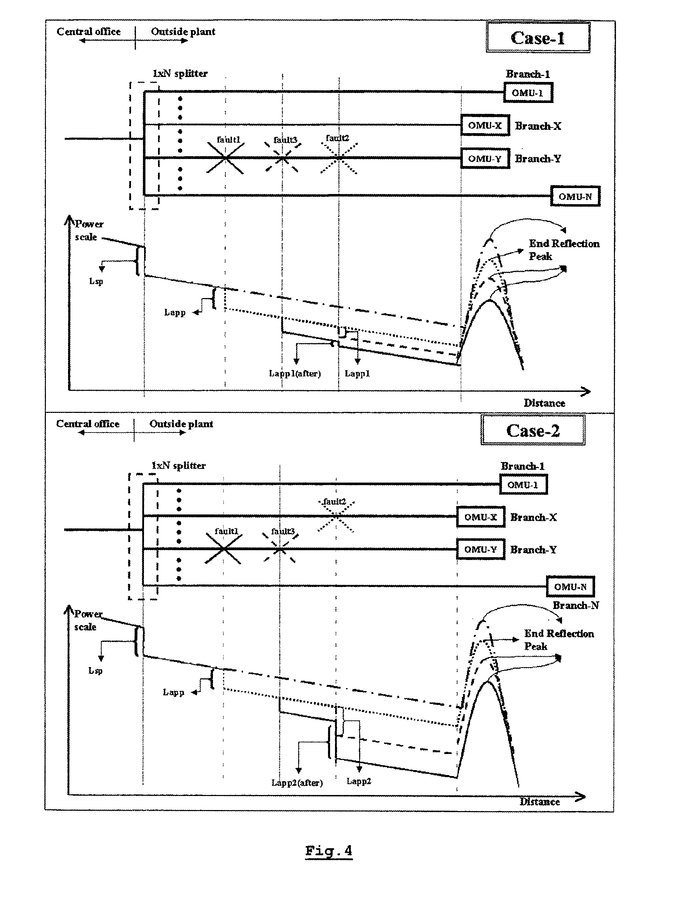

In Example 2 (Fig.4), that is in fact a continuation of Example 1, a third fault (fault3, dashed cross) has occurred. Fig.4 shows that the apparent losses of fault2 before the occurrence of fault3 ($L_{app1}$ and $L_{app2}$ for case 1 and 2, respectively) at the position of the fault 2 are different from the apparent losses of fault2 after the occurrence of fault3 ($L_{app1}$ (after) and $L_{app2}$ (after) for case 1 and 2, respectively), moreover they are not affected in the same proportion. Each new fault will affect the apparent values of all previous faults located after the new fault. Therefore it is necessary to perform the analysis of discriminating new faults from the point closer to the OMT towards the points near to the OMUs. After determining a new fault, it is necessary to calculate all new apparent losses for all the previous faults located after the newly determined fault.

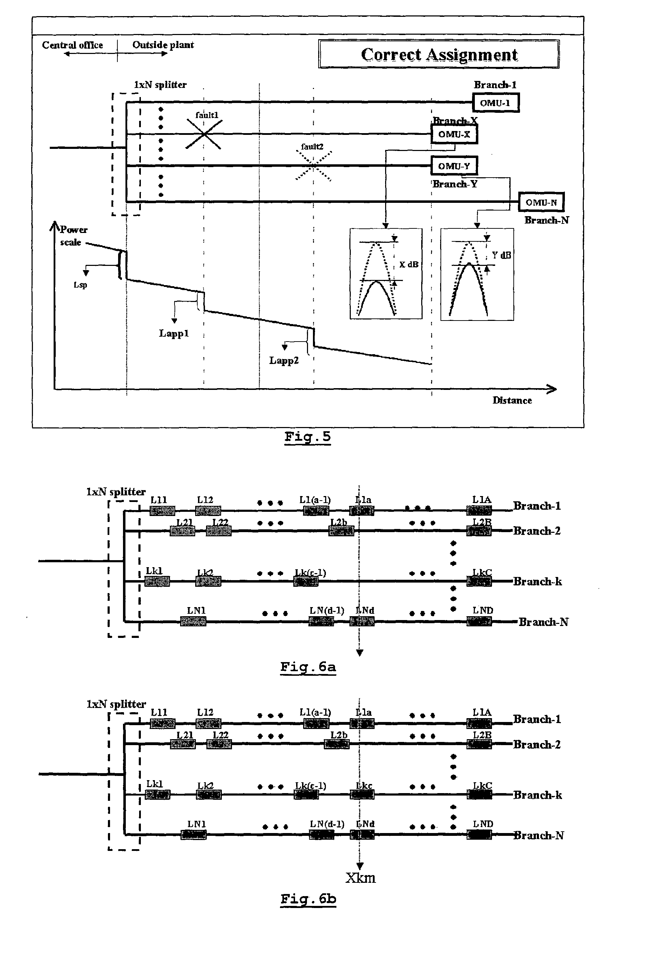

Finally, Example 3 illustrates a scenario where two simultaneous faults are detected (see Fig.5). First of all, one finds out there are two faulty branches (branch-X and branch-Y) as their end reflection peaks are changed. By calculating the real losses of fault1 and fault2 from the apparent losses and comparing them with the quantity of the end reflection peak variations for each faulty branch (branch-X and branch-Y), it is possible to assign the right fault to the right branch.

As already mentioned in the examples it is not possible to calculate directly the real loss from the apparent loss for the second and subsequent faults. Therefore a new formula is to be used in order to quantify newly arrived fault(s) when there are previously detected faults in the network. Fig.6 shows the problem in a general form. In figure 6a L11, L12, ..., LN1, ..., Lla, L2b, LNd, ... L1A, L2B, ..., LND all represent real losses calculated for previously occurred and detected faults in the network a, b, c, d are integer numbers representing number of faults in each branch before and at location X km. A, B, C, D are integer numbers representing total number of faults in each branch (i.e. in branch 1 for example, there are A faults until the end of the branch, 'a' of them being in the first Xkm from the OMT). There are N branches in the network and k is the index of the $k^{th}$ branch in the network. In Fig.6b a new fault (the $c^{th}$ fault) in branch-k has occurred. Lapp[Xkm] is the apparent loss read on OTDR trace at Xkm after $L_{kc}$ has arrived. $L_{kc}$ represents the real loss of the new fault that is to be determined. The apparent loss can be expressed as

$$Lapp[Xkm] = -5\log\left[\frac{\overbrace{10^{-\sum_{i=1}^{a}\frac{L_{1i}}{5}}+10^{-\sum_{i=1}^{b}\frac{L_{2i}}{5}}+...+\boxed{10^{-\sum_{i=1}^{c-1}\frac{L_{ki}}{5}}\cdot 10^{-\frac{L_{kc}}{5}}}+...+10^{-\sum_{i=1}^{d}\frac{L_{Ni}}{5}}}^{total\ A}}{\underbrace{10^{-\sum_{i=1}^{a-1}\frac{L_{1i}}{5}}+10^{-\sum_{i=1}^{b}\frac{L_{2i}}{5}}+...+10^{-\sum_{i=1}^{c-1}\frac{L_{ki}}{5}}+...+10^{-\sum_{i=1}^{d-1}\frac{L_{Ni}}{5}}}_{totalB}}\right]$$

(equation 2)

wherein the real losses L11, L12, ... are all in dB.
Defining totalA, totalB and termC as stated in equation 2, the unknown $L_{kc}$ is then found

$$L_{kc} = -5\log_{10}\left[\frac{10^{-\frac{Lapp[Xkm]}{5}}\ totalB - totalA}{termC}\right]$$

(equation 3)

A major advantage of the monitoring system is that it can be installed on any optical network without adaptation (ONU, protocols, ...), as the system is potentially compatible with all PON and can be physically inserted as a plug-in (at ONU and OLT sites).

Different applications are considered including the monitoring of pipes, cables, engineering structures (bridges, stones, ...) with fibres being attached to the structure to be monitored.

## Claims

1. Monitoring device for an optical network, said network comprising a main line being connected to said network's head end at one end and to at least two branches at the other end, **characterised in that** said monitoring device comprises an optical monitoring termination (OMT) being in connection with said network head end, said optical monitoring termination comprising

   • equipment for sending a monitoring signal and receiving a backreflected and backscattered signal from said monitoring signal,
   • conversion means for converting said received signal into a waveform data,
   • processing means for deriving from said waveform data information regarding faults on the physical layer of said optical network, and
   • storage device for storing at least a part of said information regarding faults,

   and **in that** said monitoring device further comprises in at least one branch of said at least two branches an optical monitoring unit (OMU) in connection with said branch, at least one of said optical monitoring units comprising a switchable reflective element (SRE), said OMT and OMU further being arranged for communicating with each other.

2. Monitoring device as in claim 1, further comprising at least one wavelength selective coupling device.

3. Monitoring device as in claim 1 or 2, wherein said monitoring signals are OTDR signals.

4. Monitoring device as in any of claims 1 to 3, wherein said OMT communicates control commands to said OMU.

5. Monitoring device as in claim 4, wherein said control commands are coded with series of optical pulses.

6. Monitoring device as in any of claims 1 to 5, wherein said OMT communicates control commands to said OMU via said network head end and an optical network unit being in connection with said OMU.

7. Monitoring device as in any of claims 1 to 6, wherein each OMU has its own address.

8. Monitoring device as in any of the previous claims, wherein said OMT is further in connection with external processing means and/or an external storage device.

9. Method for monitoring a multi-branch optical network comprising a main line being connected to said network's head end at one end and to at least two branches at the other end by means of a monitoring device as in any of the previous claims, comprising the steps of

   - setting a switchable reflective element (SRE) of a branch in the 'on' state, said branch being the current branch, and all other branches being in the 'off' state,
   - taking a current waveform data for said current branch in said OMT, by sending a monitoring signal, receiving a backreflected signal from said SRE in the 'on' state and backscattered monitoring signals from said at least two branches, and by converting said received signals,
   - comparing the end-reflection peak of said current waveform data with that of a reference waveform data of said current branch,
   - processing said current waveform data to derive information regarding faults on the physical layer of said optical network.

10. Method for monitoring a multi-branch optical network as in claim 9, wherein the first step is preceded by the step of taking one-by-one a reference waveform data of each of said at least two branches.

11. Method for monitoring as in claim 9, wherein after the step of taking a current waveform data the step is performed of preprocessing said current waveform data.

12. Method for monitoring as in claim 9, 10 or 11, wherein the steps are performed repeatedly for all branches until a fault indication occurs.

13. Method for monitoring as in claim 12, wherein after fault detection the step is performed of determining said fault and parameters related to said fault.

14. Method for monitoring as in claim 13, wherein the step of taking a reference waveform data is repeated after determination of a fault.

mux.　　splitter　demux.

Fig.1

λm →

← λm

Monitoring Signal
Communication signal →

Communication Signal →

ONU

OMU
scheme

Monitoring signal ↓

coupler1

SRE

coupler2

photodiode

electronics

on/off switch

Fig.2

Fig.3

**EP 1 578 038 A1**

Fig. 4

12

EP 1 578 038 A1

**Fig.5**

**Fig.6a**

**Fig.6b**

13

**European Patent Office**

## EUROPEAN SEARCH REPORT

Application Number

EP 04 44 7069

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 1 098 458 A (FUJITSU LTD) 9 May 2001 (2001-05-09) * figures 17-19 * * paragraphs [0021], [0022], [0026], [0027], [0032], [0034], [0036], [0073], [0078] * | 1-8 | H04B10/08 |
| A | | 9-14 | |
| A | IZUMI SANKAWA ET AL: "FAULT LOCATION TECHNIQUE FOR IN-SERVICE BRANCHED OPTICAL FIBER NETWORKS" IEEE PHOTONICS TECHNOLOGY LETTERS, IEEE INC. NEW YORK, US, vol. 2, no. 10, 1 October 1990 (1990-10-01), pages 766-768, XP000171284 ISSN: 1041-1135 * the whole document * | 1-14 | |
| A | L. WUILMART, V. MOEYAERT, D. DANIAUX, P. MÉGRET, M. BLONDEL: "A PC-based method for the localisation and quantization of faults in passive tree-structured optical networks using the OTDR technique" IEEE LASER AND ELECTRO-OPTICS SOCIETY 1996 ANNUAL MEETING, vol. 2, 19 November 1996 (1996-11-19), pages 122-123, XP009035674 ISBN: 0-7803-3160-5 * the whole document * | 1-14 | TECHNICAL FIELDS SEARCHED (Int.Cl.7) H04B |

The present search report has been drawn up for all claims

| Place of search | Date of completion of the search | Examiner |
|---|---|---|
| Munich | 31 August 2004 | Petitit, N |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 1 578 038 A1

## ANNEX TO THE EUROPEAN SEARCH REPORT
## ON EUROPEAN PATENT APPLICATION NO.

EP 04 44 7069

This annex lists the patent family members relating to the patent documents cited in  the above-mentioned European search report.
The members are as contained in the European Patent Office EDP file on
The European Patent Office is in no way  liable for these particulars which are merely  given for the purpose of information.

31-08-2004

| Patent document cited in search report | | Publication date | Patent family member(s) | | Publication date |
|---|---|---|---|---|---|
| EP 1098458 | A | 09-05-2001 | JP | 2001136110 A | 18-05-2001 |
| | | | EP | 1098458 A2 | 09-05-2001 |
| | | | US | 6534997 B1 | 18-03-2003 |

EPO FORM P0459

For more details about this annex : see Official Journal of the European Patent Office, No. 12/82

15